Europäisches Patentamt

European Patent Office

Office européen des brevets

(11) Veröffentlichungsnummer: **0 545 509 A1**

# EUROPÄISCHE PATENTANMELDUNG

(21) Anmeldenummer: **92250343.8**

(22) Anmeldetag: **21.11.92**

(51) Int. Cl.5: **B01D 53/36**, B01J 29/04, A62D 3/00

(30) Priorität: **21.11.91 DE 4138272**

(43) Veröffentlichungstag der Anmeldung:
**09.06.93 Patentblatt 93/23**

(84) Benannte Vertragsstaaten:
**AT BE CH DE DK ES FR GB GR IT LI LU MC NL PT SE**

(71) Anmelder: **VAW Aluminium AG**
**Georg-von-Boeselager-Strasse 25**
**W-5300 Bonn 1(DE)**

(72) Erfinder: **Tissler, Arno, Dr.**
**Koernicke Strasse 2**
**W-5300 Bonn 1(DE)**
Erfinder: **Ade, Thomas, Dr.**
**Schedestrasse 4**
**W-5300 Bonn 1(DE)**

Erfinder: **Unger, Baldur, Dr.**
**Saalfelder Strasse 130**
**W-6421 Reichmannsdorf(DE)**
Erfinder: **Thome, Roland, Dr.**
**Brüsseler Strasse 58**
**W-5300 Bonn(DE)**
Erfinder: **Öhlmann, Gerhard, Dr.**
**Nikolai-Kirchplatz 5**
**W-1020 Berlin(DE)**
Erfinder: **Jerschkewitz, Hans-Georg, Dr.**
**Erich-Weinert-Strasse 79**
**W-1071 Berlin(DE)**

(74) Vertreter: **Müller-Wolff, Thomas, Harwardt**
**Neumann, et al**
**Patent- und Rechtsanwälte Scheerengasse 2**
**W-5200 Siegburg (DE)**

(54) Katalysatormaterial, seine Verwendung sowie ein Verfahren zur Hydrodehalogenierung von organischen Halogenverbindungen.

(57) Die Erfindung betrifft ein Katalysatormaterial auf der Basis mikroporöser, kristalliner Molekularsiebe, die Verwendung dieses Katalysatormaterials und ein Verfahren zur heterogenkatalytischen Hydrodehalogenierung von organischen Halogenverbindungen.

Der Erfindung liegt die Aufgabe zugrunde, ein Katalysatormaterial anzubieten, das den Zutritt größerer Moleküle organischer Halogenverbindungen, wie polyhalogenierte Dibenzo-p-Dioxine und polyhalogenierte Dibenzofurane, an die katalytisch wirksamen Zentren gestattet, und die Hydrodehalogenierung bei relativ niedrigen Temperaturen und Drücken in hoher Ausbeute möglich macht.

Die Lösung der Aufgabe erfolgt mit einem Katalysatormaterial auf der Basis mikroporöser, kristalliner Molekularsiebe und einem Verfahren zur heterogenkatalytischen Hydrodehalogenierung von olefinischen und aromatischen Halogenverbindungen in organischen Lösungsmitteln.
Erfindungsgemäß besteht das Katalysatormaterial wenigstens teilweise aus Molekularsieben mit mehr als 12-gliedrigen Sauerstoffringen im Gemisch mit 0 bis 90 % Aluminiumoxid und Dotierungen der Metalle der Gruppen VIIIB und/oder VIB des Periodensystems. Die Molekularsiebe weisen im Röntgendiffraktogramm zumindest die zu den in Tabelle 1 und Tabelle 2 aufgelisteten Netzebenenabständen gehörenden Röntgenreflexe auf.

Die Erfindung betrifft ein Katalysatormaterial auf der Basis mikroporöser kristalliner Molekularsiebe, die Verwendung dieses Katalysatormaterials und ein Verfahren zur heterogenkatalytischen Hydrodehalogenierung von organischen Halogenverbindungen.

In Filteranlagen von Müllverbrennungsanlagen und Sondermüllverbrennungsanlagen sowie Gasreinigungsanlagen von Metallumschmelzanlagen fallen Filterstäube an, die u.a. mit hochtoxischen polyhalogenierten Dibenzo-p-Dioxinen (PXDD) und polyhalogenierten Dibenzofuranen (PXDF) kontaminiert sind. Diese Filterstäube stellen eine hohe Umweltgefährdung dar. Sie können nicht weiterverwendet oder auf einfache Weise entsorgt werden. Möglich ist die Verbrennung in Hochtemperaturverbrennungsanlagen, die über spezielle Aktivkohlerückhaltesysteme verfügen. Die entstehende belastete Aktivkohle stellt anschließend jedoch wieder ein Umweltproblem dar.

Da Dioxine im kühlen Abgas grundsätzlich an Partikel gebunden sind, sind zur Einhaltung der vorgegebenen Grenzwerte spezielle Filteranlagen notwendig. Alternative Systeme, wie Oxidationskatalysatoren oder Thermische Nachverbrennung (TNV) spielen z.Zt. noch keine große Rolle. Umweltrelevante Dioxinkonzentrationen und andere Chlorkohlenwasserstoffe werden beispielsweise gefunden in: EGR-Stäuben, Staubabscheidern (Zyklone), Gewebefilterrückständen, Gaswaschflüssigkeiten, Aktivkohlen, kontaminierten Böden und Produktionsrückständen in der Chlorchemie. Diese Feststoffe bzw. Wässer können unter hohen Temperaturen (> 1000 °C) thermisch behandelt oder mit aromatischen Lösungsmitteln wie Toluol oder Xylolen extrahiert und dadurch von den PXDD/PXDF dekontaminiert werden. Man erhält anschließend einen PXDD/PXDF-Extrakt, der auf verschiedene Arten weiterbehandelt werden kann:

a) Die Dehalogenierung von PXDD/PXDF mit Hilfe des sogenannten KPEG-Verfahrens wird von Tiernan et al. in "Chemosphere, 1988, 19(1-6) 573-8) beschrieben. Hierbei werden Bodenextrakte bei Temperaturen oberhalb 100 °C mit einer Mischung aus KOH und Polyethylenglycol behandelt. Der Nachteil dieses Verfahrens besteht in der Belastung des Filterstaubs durch auslaugbare Kalisalze sowie dem hohen Preis der notwendigen Reagenzien.

b) Die Dechlorierung von polychloriertem Kohlenwasserstoff in einer Metalldispersion von flüssigem Natrium oder Kalium beschreibt das Canadische Patent CA 1247139. Nachteile sind hohe Preise für metallische Alkali und ihre gefährliche Handhabung.

c) Die Behandlung von PXDD/PXDF-kontaminierten Flugaschen mit metallischem Kupfer beschreibt Hagenmaier et al. in "Environ. Sci. Technol., 21 (11) 1085-88". Der Nachteil liegt im hohen (stöchiometrischen) und dadurch unwirtschaftlichen Kupferverbrauch, der notwendigen Entsorgung des entstandenen $CuCl_2$. Für hohe Flugaschendurchsätze muß die Reaktion zudem bei hohen Temperaturen von ca. 300 °C geführt werden.

d) Der katalytische Abbau von Chloraromaten in Flugaschen bei ca. 400 °C wird in DE 3703984 beschrieben. Die Nachteile dieses Verfahrens liegen in der benötigten hohen Reaktionstemperatur, dem relativ schlechten Abbaugrad und der Tatsache, daß die katalytische Eigenaktivität der Flugaschen stark schwankt.

e) Die Hydrodechlorierung von Hexachlorbenzol wird in dem Patent CS 267471 beschrieben. Verwendet wird ein Platinkatalysator auf $Al_2O_3$, der das Hexachlorbenzol zu niederchlorierten Chlorbenzolen umwandelt. Die Nachteile dieses Verfahrens bestehen darin, daß die Reaktionsprodukte immer noch giftig sind und entsorgt werden müssen, daß die Reaktion bei relativ hohen Temperaturen von 450 °C geführt werden muß und der verwendete Katalysator mit ca. 5 Gew.-% Platin dotiert und somit sehr teuer ist.

Im folgenden verstehen sich Prozentangaben als Gewichtsprozente bezogen auf bei 1000 °C geglühte Trockensubstanz.

f) Die Herstellung eines Pd-dotierten $Al_2O_3$-Katalysatormit hoher katalytischen Aktivität für die Hydrodechlorierung von Chlorbenzolen beschreibt HU 63722. Die Nachteile liegen in dem sehr hohen Aufwand bei der Katalysatorherstellung und der, bedingt durch die Eigenschaften des Trägermaterials zu erwartenden ungenügenden Abbauraten für PXDD/PXDF.

g) Die Verwendung eines typischen Hydroraffinationskatalysators (sulfidisierte Co-Mo-$Al_2O_3$-Katalysatoren) zur Hydrodehalogenierung von halogenierten Aromaten in Dodekan beschreibt Bonnet et al. in "J. Org. Chem., 48 (23), 4396-7". Die Nachteile liegen bei der notwendigen hohen Temperatur und den daraus resultierenden hohen Drücken von ca. 50 bar. Die eingesetzen Katalysatoren benötigen zudem hohe Metallgehalte (> 10 %) und sie sind für eine Prozeßführung in aromatischen Lösungsmitteln ungeeignet, da diese unter den angegebenen Reaktionsbedingungen selbst hydriert werden.

Ein Katalysatormaterial, bestehend aus einem mikroporösen kristallinen Molekularsieb, das mit Metallen der Gruppe VIIIB des Periodensystems dotiert ist, ist aus "Rev. Chim. (Bucharest) 28 (11), 1977, 1039 bis 1041" bekannt. Dabei handelt es sich um die Verwendung eines metalldotierten Y-Zeolithen, dessen Poreneinangsöffnungen durch 12-gliedrige Sauerstoffringe begrenzt sind. Dieses Katalysatormaterial ist für die heterogenkatalytische Hydrodehalogenierung nur unzureichend geeignet, da der Abbaugrad, bezogen auf halogeniertes Einsatzprodukt, weniger als 70 % beträgt.

Molekularsiebe mit weniger als 12-gliedrigen Sauerstoffringen, die zum zeolithischen Typ der Alumosilikate gehören, sind seit langem bekannt. Sie zeichnen sich dadurch aus, daß ihre Struktur aus $AlO_2$- und $SiO_2$-Tetraedern aufgebaut ist, deren Anordnung im Gitter zu einer charakteristischen Porenstruktur führt. Diese und andere Eigenschaften verleihen diesen Materialien hervorragende Eigenschaften bei katalytischen Umwandlungen sowie bei Stofftrennprozessen. Molekularsiebe, die an Stelle des Siliziums Phosphor enthalten, werden in zahlreichen Patentschriften beschrieben (z.B. US 3972832, US 39911041). Diese Molekularsiebe eignen sich jedoch nur zur Umsetzung von relativ kleinen Molekülen. Sie sind für PXDD/PXDF, bedingt durch ihre zu geringe Porengröße, ungeeignet.

In den Druckschrften EP 0 146 389 A2, EP 0 406 872 A2 und US-PS 4310440 wird die Herstellung von Molsieben beschrieben, deren Poren und Öffnungen, die von mehr als 12-gliedrigen Sauerstoffringen gebildet werden, vergleichsweise größer sind. Allerdings ist die Eignung dieser Molsiebe als Katalysatorträgermaterial für die heterogenkatalytische Hydrodehalogenierung von halogenaromatischen Kohlenwasserstoffen bisher nicht bekannt.

Der Erfindung liegt nunmehr die Aufgabe zugrunde, ein Katalysatormaterial anzubieten, das den Zutritt größerer Moleküle organischer Halogenverbindungen, wie polyhalogenierte Dibenzo-p-Dioxine und polyhalogenierte Dibenzofurane, an die katalytisch wirksamen Zentren gestattet, und die Hydrodehalogenierung bei relativ niedrigen Temperaturen und Drücken in hoher Ausbeute möglich macht.

Die Lösung der Aufgabe erfolgt mit einem Katalysatormaterial auf der Basis mikroporöser, kristalliner Molekularsiebe und einem Verfahren zur heterogenkatalytischen Hydrodehalogenierung von olifinischen und aromatischen Halogenverbindungen in organischen Lösungsmitteln.

Erfindungsgemäß besteht das Katalysatormaterial wenigstens teilweise aus Molekularsieben mit mehr als 12-gliedrigen Sauerstoffringen im Gemisch mit 0 bis 90 % Aluminiumoxid und Dotierungen der Metalle der Gruppen VIIIB und/oder VIB des Periodensystems. Die Molekularsiebe weisen im Röntgendiffraktogramm zumindest die zu den in Tabelle 1 und Tabelle 2 aufgelisteten Netzebenenabständen gehörenden Röntgenreflexe auf. Erfindungsgemäß können die Molekularsiebe auch als Gemisch vorliegen, wobei eine Komponente des Gemisches im Röntgendiffraktogramm zumindest die zu den in Tabelle 1 aufgelisteten Netzebenenabständen gehörenden Röntgenreflexe aufweist und die andere Komponente die zu den in Tabelle 2 aufgelisteten Netzebenenabständen gehörenden Röntgenreflexe aufweist. Als Dotierungen enthält das erfindungsgemäße Katalysatormaterial insbesondere die Metalle Palladium, Platin, Nickel und/oder Molybdän. In einer Variante der Erfindung werden Nickel und Molybdän in oxidischer Form eingesetzt. In einer weiteren erfindungsgemäßen Variante werden die Metalle Nickel und Molybdän in sulfidischer Form verwendet. Beim erfindungsgemäßen Verfahren zur Hydrodehalogenierung werden die bereits beschriebenen Katalysatormaterialien eingesetzt, und die Durchführung der Reaktion erfolgt bei 25 - 250 °C, insbesondere bei Temperaturen von 50 bis 120 °C in Gegenwart von Wasserstoff bei Drücken von 1 bis 100 bar, insbesondere bei Drücken im Bereich 2 bis 8 bar. Als Lösungsmittel bei den organischen Halogenverbindungen werden Toluol und Xylol eingesetzt. Es wurde gefunden, daß die erfindungsgemäßen mit Palladium als aktive Komponente beladene Katalysatormaterialien sehr gut für die Hydrodehalogenierung von polyhalogenierten Dibenzo-p-Dioxinen (PXDD) und polyhalogenierten Dibenzofuranen (PXDF) geeignet sind. Mit der Erfindung gelang die Entwicklung eines ökonomischen und umweltfreundlichen Verfahrens zur Dekontamination von mit Halogenkohlenwasserstoffen, insbesondere von mehrkernigen Halogenaromaten (PCB, PXDD und PXDF) verunreinigten umweltschädlichen Stoffen bzw. Stoffgemischen. Es wurde erkannt, daß ein mit Metall beladener mikroporöser, kristalliner Träger bei der Verwendung von Palladium als Aktivkomponente im Porensystem, bedingt durch die mikroporöse Struktur des Trägers, eine bessere Verteilung als beispielsweise auf $\gamma$-$Al_2O_3$ erreicht. Einem Sintern und Verklumpen der Palladiumteilchen wird durch die Struktur der Trägerkomponente entgegengewirkt. Der hohe Umsatz wird durch die homogene, sogenannte extraweite Porengröße, die ein Eindringen der zu hydrodehalogenierenden Moleküle erlaubt, erklärt. Hohe und temperaturstabile Aktivphasendispersität und gute Zugänglichkeit für voluminöse Moleküle sind Ursache hoher Dehalogenierungsgrade bei relativ niedrigen Temperaturen. Im Gegensatz hierzu ist bei Verwendung von kleinporigen kristallinen Molekularsieben (siehe Beispiel 3, Einsatz eines 12-Ring-Alumophosphates) eine vergleichsweise deutlich geringere Aktivität zu beobachten, da für die großen chlorierten Moleküle die Aktivkomponente im Porensystem nicht zugänglich ist. Dieser Effekt wird veranschaulicht durch die Unterschiede der Aktivität in Beispiel 3, 4 und 5. Während $AlPO_4$-5 (Beispiel 3 in Tab. 3) mit einer Porenöffnungsweite von ca. 0,75 nm nur einen geringen Abbaugrad von 15 % zu unchlorierten Produkten aufweist, zeigt der chemisch gleich zusammengesetzte, strukturell ähnliche Träger 1 (siehe Tab. 2) mit einer Porenöffnung von ca. 0,9 nm unter gleichen Versuchsbedingungen schon einen Abbaugrad von 83 %. Eine etwas höhere Hydrodehalogenierungsaktivität gegenüber chlorierten Dibenzodioxinen besitzt der Katalysator mit Träger 2 und 0,5 % Pd (siehe Beispiel 5.).

Überraschenderweise bewirkt die Verwendung geringerer Mengen an Pd eine Erhöhung der Katalysatoraktivität. Dieser Effekt ist durch eine verbesserte Dispersität des Pd auf der Trägeroberfläche erklärbar. Bei einer höheren Pd-Beladung als 0,15 % werden die Diffusionsvorgänge von Edukten und Reaktionsprodukten im Porensystem durch die Ausbildung von Pd-Clustern, was zu einer teilweisen oder vollständigen Blockierung des Porensystems führt, gehindert. Nur bei einer hohen Dispersität der Aktivkomponente ist die Zugänglichkeit und damit die Katalysatoraktivität gewährleistet. Offensichtlich ist dies auf die hohe innere Oberfläche des Trägers in Verbindung mit den definierten Porengrößen zurückzuführen.

Die Verwendung eines Mischkatalysators analog Beispiel 7, 8, 9, 10, 13, 14, 15 und 16 ermöglicht eine weitere Erhöhung der Aktivität. Dies ist durch die Existenz von an den verschiedenen Katalysatortypen unterschiedlich schnell ablaufenden Reaktionsschritten erklärbar. Offensichtlich wirkt sich bei der Hydrodehalogenierung besonders von reaktionsträgen, hochchlorierten Aromaten (hier PXDD) dieser Effekt besonders stark aus.

Durch die Kombination der oben beschriebenen Effekte kann ein Mischkatalysator zur Verfügung gestellt werden, der allen anderen Katalysatoren für die Hydrodehalogenierung von organischen Halogenverbindungen, besonders von polyhalogenierten Dibenzodioxinen, überlegen ist.

Tabelle 1

| Wesentliche Netzebenenabstände der Struktur des in den Beispielen 5 bis 16 (außer 12) verwendeten Molekularsiebes [VPI-5, siehe M.E. Davis et al, Zeolites 8(1988)362]: | |
|---|---|
| d-Wert (nm) | relative Intensität* |
| $1,636 \pm 0,150$ | sst |
| $0,820 \pm 0,100$ | st |
| $0,475 \pm 0,100$ | s |
| $0,409 \pm 0,075$ | s |
| $0,405 \pm 0,075$ | s |
| $0,377 \pm 0,050$ | st |
| $0,328 \pm 0,050$ | st |
| $0,295 \pm 0,040$ | m |
| $0,274 \pm 0,040$ | m |

* die relative Intensität ist ein Maß für die Intensität der Einzelreflexe, bezogen auf die Intensität des stärksten Reflexes mit:

sst = sehr stark (intensivster Reflex), st = stark, m = mittelstark, s = schwach

Tabelle 2

| Wesentliche Netzebenenabstände der Struktur des im Beispiel 4 verwendeten Molekularsiebes [$AlPO_4$-8, siehe z.B. US 4310440]: | |
|---|---|
| d-Wert (nm) | relative Intensität |
| $1,638 \pm 0,150$ | st |
| $1,334 \pm 0,150$ | sst |
| $0,880 \pm 0,100$ | st |
| $0,549 \pm 0,080$ | st |
| $0,441 \pm 0,075$ | m |
| $0,418 \pm 0,075$ | s |
| $0,412 \pm 0,075$ | s |
| $0,396 \pm 0,050$ | m |
| $0,390 \pm 0,050$ | m |
| $0,367 \pm 0,050$ | m |
| $0,358 \pm 0,050$ | m |

Die Erfindung wird an den folgenden Ausführungsbeispielen näher erläutert. Alle Ergebnisse sind in der Tabelle 3 zusammengefaßt.

**Beispiel 1:**

Verwendet wird ein kommerzieller Hydrierkatalysator mit 0,5 % Pd auf $\gamma$-Aluminiumoxid. In einem 5 ml Edelstahlautoklaven werden 100 mg des Katalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, v = 2 s$^{-1}$) geschüttelt. Nach dem Abkühlen wird der Gehalt an 2.3.7.TCDD und OCDD mit Hilfe von Gaschromatographie mit massenselektiver Detektion (GC-MS) bestimmt. Die Summe aus abgebautem 2.3.7.TCDD und OCDD beträgt 80 %.

**Beispiel 2:**

Verwendet wird ein kommerzieller Hydrierkatalysator mit 0,5 % Pt auf $\gamma$-Aluminiumoxid. In einem 5 ml Edelstahlautoklaven werden 100 mg des Katalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, v = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt 70 %.

**Beispiel 3:**

Verwendet wird ein Katalysator auf Basis eines $AlPO_4$-5-Molekularsiebes, der gemäß US-Patent 4.310.440 hergestellt, mit 30 % amorpher Kieselsäure geformt und mit 0,5 % Pd belegt wurde und dessen Porenöffnungen durch 12-gliedrige Sauerstoffringe gebildet werden. Die Belegung erfolgt durch Tränken der Formkörper mit einer Lösung, bestehend aus $Pd(NH_3)_2Cl_2$ und der dem Tränkvolumen der Formkörper entsprechenden Menge Wasser. Die Aktivierung des Katalysators erfolgte durch Tempern bei 140 °C im Wasserstoffstrom. In einem 5 ml Edelstahlautoklaven wird 100 mg des Katalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, v = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt 15 % der eingesetzten Gesamtmenge.

**Beispiel 4:**

Verwendet wird ein nach EP 0406 872, Beispiel 2, hergestelltes Molekularsieb, das in feuchtem Zustand bei 450 °C 12 Stunden getempert wurde und die zu den in Tab. 2 aufgeführten Netzebenenabständen gehörenden Röntgenreflexe aufweist. Es handelt sich um ein Molekularsieb vom Typ $AlPO_4$-8, dessen Poren von 14-gliedrigen Sauerstoffringen begrenzt werden. Die Belegung erfolgte an mit 30 % amorpher Kieselsäure verstrangten Formkörpern durch Tränken mit einer Lösung, bestehend aus $Pd(NH_3)_2Cl_2$ und der dem Tränkvolumen der Formkörper entsprechenden Menge Wasser. Nach der Belegung betrug die Pd-Konzentration 0,5 %, bezogen auf den Glührückstand des Katalysators bei 1000 °C. Die Aktivierung des Katalysators erfolgte bei 140 °C im Wasserstoffstrom. In einem 5 ml Edelstahlautoklaven werden 100 mg des Katalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt 83 % .

**Beispiel 5:**

Verwendet wird ein nach EP 0406 872, Beispiel 2, hergestelltes Molekularsieb, das die zu den in Tab. 1 aufgeführten Netzebenenabständen gehörenden Röntgenreflexe aufweist. Es handelt sich um ein Molekularsieb vom Typ VPI-5, dessen Poren von 18-gliedrigen Sauerstoffringen begrenzt werden. Die Belegung erfolgte an mit 30 % amorpher Kieselsäure verstrangten Formkörpern durch Tränken mit einer Lösung, bestehend aus $Pd(NH_3)_2Cl_2$ und der dem Tränkvolumen der Formkörper entsprechenden Menge Wasser.

Nach der Belegung betrug die Pd-Konzentration 0,5 %, bezogen auf den Glührückstand des Katalysators bei 1000 °C. Anschließend wurde der präparierte Träger bei einem Partialdruck < 10$^{-3}$ Torr und einer

Aufheizrate von 1 Grad/Minute bei einer Temperatur von 250 °C aktiviert. Der Erhalt seiner Struktur wurde anhand von röntgendiffraktometrischen Messungen bestätigt. In einem 5 ml Edelstahlautoklaven werden 100 mg des Katalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt 85 %.

**Beispiel 6:**

Verwendet wird ein nach EP 0406 872, Beispiel 2, hergestelltes Molekularsieb, das die zu den in Tab. 1 aufgeführten Netzebenenabständen gehörenden Röntgenreflexe aufweist. Die Belegung erfolgte an mit 30 % amorpher Kieselsäure verstrangten Formkörpern durch Tränken mit einer Lösung, bestehend aus Pd-(NH$_3$)$_2$Cl$_2$ und der dem Tränkvolumen der Formkörper entsprechenden Menge Wasser. Nach der Belegung betrug die Pd-Konzentration 0,15 %, bezogen auf den Glührückstand des Katalysators bei 1000 °C. Anschließend wurde der präparierte Träger bei einem Partialdruck < 10$^{-3}$ Torr und einer Aufheizrate von 1 Grad/Minute bei einer Temperatur von 250 °C aktiviert. Der Erhalt seiner Struktur wurde anhand von röntgendiffraktometrischen Messungen bestätigt. In einem 5 ml Edelstahlautoklaven werden 100 mg des Katalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt 92 %.

**Beispiel 7:**

Verwendet wird ein Mischkatalysator, der aus 50 % eines Katalysators gemäß Beispiel 1. und aus 50 % eines Katalysators gemäß Bespiel 5 besteht. In einem 5 ml Edelstahlautoklaven werden 100 mg des Mischkatalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt > 99 %.

**Beispiel 8:**

Verwendet wird ein Mischkatalysator, der aus 50 % eines Katalysators gemäß Beispiel 1. und aus 50 % eines Katalysators gemäß Bespiel 6 besteht. In einem 5 ml Edelstahlautoklaven werden 100 mg des Mischkatalysators mit 2 ml einer Lösung von 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt > 99 %.

**Beispiel 9:**

Verwendet wird ein Mischkatalysator, der aus 50 % eines Katalysators gemäß Beispiel 1. und aus 50 % eines Katalysators gemäß Bespiel 6 besteht. In einem 5 ml Edelstahlautoklaven werden 100 mg des Mischkatalysators mit 2 ml einer Lösung von 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 50 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt > 99 %.

**Beispiel 10:**

Verwendet wird ein Mischkatalysator, der aus 50 % eines Katalysators gemäß Beispiel 1. und aus 50 % eines Katalysators gemäß Bespiel 6 besteht. In einem 5 ml Edelstahlautoklaven werden 100 mg des Mischkatalysators mit 2 ml einer Lösung von 20 $\mu$g Octachlordibenzo-p-Dioxin in Toluol dispergiert. Nach Verschluß des Autoklaven wird dieser über ein Ventil mit 2 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt 98 %.

**Beispiel 11:**

Verwendet wird ein Katalysator, der entsprechend Beispiel 6 hergestellt wurde. In einem 5 ml Edelstahlautoklaven werden 100 mg des Katalysators mit 2 ml eines toluolischen Filterstaubextraktes dispergiert. Die genauen PXDD/PXDF-Gehalte des Filterstaubes zeigt Tabelle 4. Der Filterstaub enthielt 3,73 $\mu$g/kg 2.3.7.8-TCDD-TE (toxische Einheiten nach BGA 5/85).
Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.8-TCDD mit Hilfe von GC-MS bestimmt. Der Abbaugrad bezogen auf 2.3.7.8-TCDD-TE beträgt 81 %.

**Beispiel 12:**

Verwendet wird ein Katalysator, der entsprechend Beispiel 1 hergestellt wurde. In einem 5 ml Edelstahlautoklaven werden 100 mg des Katalysators mit 2 ml eines toluolischen Filterstaubextraktes dispergiert. Der Filterstaub enthielt 3,8 $\mu$g/kg 2.3.7.8-TCDD-TE.
Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.8-TCDD mit Hilfe von GC-MS bestimmt. Der Abbaugrad bezogen auf 2.3.7.8-TCDD-TE beträgt 70 %.

**Beispiel 13:**

Verwendet wird ein Mischkatalysator, der aus 50 % eines Katalysators gemäß Beispiel 1. und aus 50 % eines Katalysators gemäß Beispiel 6 besteht. In einem 5 ml Edelstahlautoklaven werden 100 mg des Katalysators mit 2 ml eines toluolischen Filterstaubextraktes dispergiert. Der Filterstaub enthielt 3,8 $\mu$g/kg 2.3.7.8-TCDD-TE.
Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.8-TCDD mit Hilfe von GC-MS bestimmt. Der Abbaugrad bezogen auf 2.3.7.8-TCDD-TE beträgt > 99 %. Die genauen Konzentrationen aller bestimmten PXDD/PXDF vor und nach der Hydrodechlorierung zeigt Tabelle 4.

**Beispiel 14:**

Verwendet wird ein Mischkatalysator, der aus 50 % eines Katalysators gemäß Beispiel 1. und aus 50 % eines Katalysators gemaß Beispiel 6 besteht. In einem 5 ml Edelstahlautoklaven werden 100 mg des Katalysators mit 2 ml eines toluolischen Filterstaubextraktes dispergiert. Der Filterstaub enthielt 3,8 $\mu$g/kg 2.3.7.8-TCDD-TE.
Nach Verschluß des Autoklaven wird dieser über ein Ventil mit 8 bar Wasserstoff beaufschlagt und 1 Stunde lang bei 50 °C in einem Ofen mit einem Exzenter (Hub = 5 cm, Verfahren = 2 s$^{-1}$) geschüttelt. Nach dem Abkühlen wird der Gehalt an 2.3.7.8-TCDD mit Hilfe von GC-MS bestimmt. Der Abbaugrad bezogen auf 2.3.7.8-TCDD-TE beträgt > 99 %. Die genauen Konzentrationen aller bestimmten PXDD/PXDF vor und nach der Hydrodechlorierung zeigt Tabelle 4.

**Beispiel 15:**

Verwendet wird ein Mischkatalysator, der aus 90 % eines Katalysators gemäß Beispiel 1. und aus 10 % eines Katalysators gemäß Beispiel 5 besteht. In einem 5 ml Edelstahlautoklaven werden 100 mg des Mischkatalysator mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren =

2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt > 85 %.

**Beispiel 16:**

Verwendet wird ein Mischkatalysator, der aus 10 % eines Katalysators gemäß Beispiel 1. und aus 90 % eines Katalysators gemäß Beispiel 5 besteht. In einem 5 ml Edelstahlautoklaven werden 100 mg des Mischkatalysators mit 2 ml einer Lösung von 20 $\mu$g 2.3.7.TCDD und 20 $\mu$g Octachlordibenzo-p-Dioxin in Toluol dispergiert. Nach Verschluß des Autoklaven wird dieser über ein Ventil mit 8 bar Wasserstoff beaufschlagt und 1 Stunde lang bei 120 °C in einem Ofen mit einem Exzenter (Hub = 5 cm, Verfahren = 2 s$^{-1}$) geschüttelt. Nach dem Abkühlen wird der Gehalt an 2.3.7.TCDD und OCDD mit Hilfe von GC-MS bestimmt. Die Summe aus abgebautem 2.3.7.TCDD und OCDD beträgt > 95 %.

## Tabelle 3 (eigene Ergebnisse):

Umsetzung von Octachlordibenzodioxin und 2.3.7.Trichlordibenzodioxin sowie von Filterstaubextrakten in Toluol nach 1 Stunde.

| Nr. | Katalysator | Temp. [°C] | $H_2$-Druck [bar] | Edukte | AG [%] |
|---|---|---|---|---|---|
| 1 | $Al_2O_3$ / 0,5 % Pd | 120 | 8 | O + T | 80 |
| 2 | $Al_2O_3$ / 0,5 % Pd | 120 | 8 | O + T | 70 |
| 3 | $AlPO_4$-5 / 0,5 % Pt | 120 | 8 | O + T | 15 |
| 4 | Träger 1 / 0,5 % Pd | 120 | 8 | O + T | 83 |
| 5 | Träger 2 / 0,5 % Pd | 120 | 8 | O + T | 85 |
| 6 | Träger 2 / 0,15 % Pd | 120 | 8 | O + T | 92 |
| 7 | Träger 2 / 0,5% Pd + $Al_2O_3$/0,5 % Pd | 120 | 8 | O + T | >99 |
| 8 | Träger 2 / 0,15% Pd + $Al_2O_3$/0,5 % Pd | 120 | 8 | O + T | >99 |
| 9 | Träger 2 / 0,15% Pd + $Al_2O_3$/0,5 % Pd | 50 | 8 | O + T | >99 |
| 10 | Träger 2 / 0,15% Pd + $Al_2O_3$/0,5 % Pd | 120 | 2 | O + T | 98 |
| 11 | Träger 2 / 0,15 % Pd | 120 | 8 | FSE | 81 |
| 12 | $Al_2O_3$ / 0,5 % Pd | 120 | 8 | FSE | 70 |
| 13 | Träger 2 / 0,5% Pd + $Al_2O_3$/0,5 % Pd | 120 | 8 | FSE | >99 |
| 14 | Träger 2 / 0,15% Pd + $Al_2O_3$/0,5 % Pd | 50 | 8 | FSE | >99 |
| 15 | 10 % von Nr. 5 + 90 % von Nr. 1 | 120 | 8 | O + T | 85 |
| 16 | 90 % von Nr. 5 + 10 % von Nr. 1 | 120 | 8 | O + T | 95 |

**Träger 1:** mikroporöses kristallines Molekularsieb mit Netzebenenabständen der XRD-Analyse gemäß Tabelle 2.

**Träger 2:** mikroporöses kristallines Molekularsieb mit Netzebenenabständen der XRD-Analyse gemäß Tabelle 1.

**Abbaugrad:** 100 % minus Summenprozent aller chlorierten dioxinischen bzw. difuranischen Produkte bezogen auf die Einsatzkonzentration.

**FSE** = Filterstaubextrakt

**O** = Octachlordibenzo-p-Dioxin (OCDD)

**T** = 2.3.7.-Trichlordibenzo-p-Dioxin (TCDD)

**AG** = Abbaugrad, bezogen auf halogenhaltiges Einsatzprodukt

**Tab. 4: Untersuchung von Toluolextrakten von Filterstaub auf PXDD und PXDF**

| Bezeichnung | Probe 1 | Probe 2 | Probe 3 |
| --- | --- | --- | --- |
| Summe Tetrachlordibenzofurane (Cl$_4$PXDF)........: | 40 | n.n. | n.n. |
| 2.3.7.8. Tetrachlordibenzofuran..............: | 2,5 | n.n. | n.n. |
| Summe Pentachlordibenzofurane (Cl$_5$-PXDF).......: | 36 | n.n. | n.n. |
| 1.2.3.7.8.-Pentachlordibenzofuran + 1.2.3.4.8.-Pentachlordibenzofuran..............: | 3,8 | n.n. | n.n. |
| 2.3.4.7.8.-Pentachlordibenzofuran..............: | 1,9 | n.n. | n.n. |
| Summe Hexachlordibenzofurane (Cl$_6$-PXDF).......: | 16 | n.n. | n.n. |
| 1.2.3.4.7.8.-Hexachlordibenzofuran + 1.2.3.4.7.9.-Hexachlordibenzofuran..............: | 1,7 | n.n. | n.n. |
| 1.2.3.6.7.8.-Hexachlordibenzofuran..............: | 2,4 | n.n. | n.n. |
| 1.2.3.7.8.9.-Hexachlordibenzofuran..............: | n.n. | n.n. | n.n. |
| 2.3.4.6.7.8.-Hexachlordibenzofuran..............: | 1,0 | n.n. | n.n. |
| Summe Heptachlordibenzofurane (Cl$_7$-PXDF).......: | 17 | 0,20 | 0,12 |
| 1,2,3,4,6,7,8-Heptachlordibenzofuran..............: | 12 | 0,20 | 0,12 |
| 1,2,3,4,7,8,9-Heptachlordibenzofuran..............: | 0,34 | n.n. | n.n. |

```
Octachlordibenzo-
furan (Cl8-PXDF).......:  14          0,20      0,28


Summe Tetrachlordibenzo-
dioxine (Cl4-PXDD).......: 4,9        0,085     0,28

2,3,7,8-Tetrachlordibenzo-
dioxin...................: 0,47       n.n.      n.n.


Summe Pentachlordibenzo-
dioxine (Cl5-PXDD)......: 14          n.n.      0,51

1,2,3,7,8-Pentachlordibenzo-
dioxin...................: 1,3        n.n.      0,05


Summe Hexachlordibenzo-
dioxin (Cl6-PXDD)......:  20          n.n.      0,42

1,2,3,4,7,8-Hexachlordibenzo-
dioxin...................: 1,3        n.n.      0,05
1,2,3,6,7,8-Hexachlordibenzo-
dioxin...................: 1,9        n.n.      0,03
1,2,3,7,8,9-Hexachlordibenzo-
dioxin...................: 1,6        n.n.      0,05


Summe Heptachlordibenzo-
dioxin (Cl7-PXDD)......:  10          n.n.      0,19

1,2,3,4,7,8-Heptachlordibenzo-
dioxin...................: 4,5        n.n.      0,11


Octachlordibenzo-
dioxin (Cl8-PXDD)......:  13          0,14      n.n.
```

**n.n.** = nicht nachweisbar

**Probe 1:** Toluolextrakt des Originalfilterstaubes

**Probe 2:** Toluolextrakt nach Hydrodechlorierung (entspr. Beispiel 13)

**Probe 3:** Toluolextrakt nach Hydrodechlorierung (entspr. Beispiel 14)

alle Einheiten in $\mu$g/Liter

Das gesamte Bestimmungsverfahren inkl. der Absicherung der Ergebnisse mit Hilfe der GC/MS-Technik ist mit 2.3.7.8-substituierten Reinstandards ($C_{13}$-markiert) verfahrenstechnisch festgelegt und verifiziert worden. Bei allen Bestimmungen wurde eine interne Standardisierung über das gesamte Bestimmungsverfahren mit 2.3.7.8-substituierten Standardverbindungen (4 bis 8 Chloratome im Molekül) der Verbindungsklasse PXDD und PXDF durchgeführt.

**Patentansprüche**

1. Katalysatormaterial auf der Basis mikroporöser, kristalliner Molekularsiebe,
   **dadurch gekennzeichnet**,
   daß das Katalysatormaterial wenigstens teilweise aus Molekularsieben mit mehr als 12-gliedrigen Sauerstoffringen im Gemisch mit 0 bis 90 % Aluminiumoxid und Dotierungen der Metalle der Gruppen VIIIB und/oder VIB des Periodensystems besteht.

2. Katalysatormaterial nach Anspruch 1,
   **dadurch gekennzeichnet**,
   daß die Molekularsiebe im Röntgendiffraktogramm zumindest die zu den in Tab. 1 aufgelisteten Netzebenenabständen gehörenden Röntgenreflexe aufweisen.

3. Katalysatormaterial nach einem der Ansprüche 1 und 2,
   **dadurch gekennzeichnet**,
   daß die Molekularsiebe im Röntgendiffraktogramm zumindest die zu den in Tab. 2 aufgelisteten Netzebenenabständen gehörenden Röntgenreflexe aufweisen.

4. Katalysatormaterial nach einem der Ansprüche 1 bis 3,
   **dadurch gekennzeichnet**,
   daß es aus einem Molekularsiebgemisch besteht, wobei eine Komponente im Röntgendiffraktogramm zumindest die zu den in Tabelle 1 aufgelisteten Netzebenenabständen gehörenden Röntgenreflexe aufweist und die andere Komponente die zu den in Tabelle 2 aufgelisteten Netzebenenabständen gehörenden Röntgenreflexe aufweist.

5. Katalysatormaterial nach einem der Ansprüche 1 bis 4,
   **dadurch gekennzeichnet**,
   daß das Katalysatormaterial als Dotierungen die Metalle Palladium, Platin, Nickel und/oder Molybdän enthält.

6. Katalysatormaterial nach einem der Ansprüche 1 bis 4,
   **dadurch gekennzeichnet**,
   daß als Metallkomponente ein Gemisch aus Nickel und Molybdän in oxidischer Form eingesetzt wird.

13

7. Katalysatormaterial nach einem der Ansprüche 1 bis 4,
**dadurch gekennzeichnet**,
daß als Metallkomponente ein Gemisch aus Ni und Mo in sulfidischer Form eingesetzt wird.

8. Verwendung eines Katalysatormaterials nach einem der Ansprüche 1 bis 7, zur heterogenkatalytischen Hydrodehalogenierung von olefinischen und aromatischen Halogenverbindungen in organischen Lösungsmitteln bei Temperaturen von 25 bis 250 °C in Gegenwart von Wasserstoff bei Drücken von 1 bis 100 bar.

9. Verwendung eines Katalysatormaterials nach Anspruch 8, zur heterogenkatalytischen Hydrodehalogenierung bei Temperaturen von 50 bis 120 °C.

10. Verwendung eines Katalysatormaterials nach einem der Ansprüche 8 und 9, zur heterogenkatalytischen Hydrodehalogenierung bei einem Druck im Bereich von 2 bis 8 bar.

11. Verwendung eines Katalysatormaterials nach einem der Ansprüche 8 bis 10, zur heterogenkatalytischen Hydrodehalogenierung von polyhalogenierten Dibenzo-p-Dioxinen, Dibenzofuranen und/oder Biphenylen.

12. Verfahren zur heterogenkatalytischen Hydrodehalogenierung von olefinischen und aromatischen Halogenverbindungen in organischen Lösungsmitteln,
**dadurch gekennzeichnet**,
daß als Katalysatormaterial wenigstens teilweise Molekularsiebe mit mehr als 12-gliedrigen Sauerstoffringen im Gemisch mit 0 bis 90 % Aluminiumoxid und Dotierungen der Metalle der Gruppen VIIIB und/oder VIB bei Temperatuen von 25 bis 250 °C in Gegenwart von Wasserstoff bei Drücken von 1 bis 100 bar eingesetzt werden.

13. Verfahren nach Anspruch 12,
**dadurch gekennzeichnet**,
daß als Lösungsmittel für die organische Halogenverbindung Toluol eingesetz wird.

14. Verfahren nach Anspruch 12,
**dadurch gekennzeichnet**,
daß als Lösungsmittel für die organische Halogenverbindung Xylol eingesetzt wird.

15. Verfahren nach einem der Ansprüche 12 bis 14,
**dadurch gekennzeichnet**,
daß die Lösung durch Extraktion von halogenaromatischen Verbindungen aus verschiedenen Matrices mit aromatischen Lösungsmitteln erhalten wird.

16. Verfahren nach einem der Ansprüche 12 bis 15,
**dadurch gekennzeichnet**,
daß das Katalysatormaterial in Pulverform dem Lösungsmittel zugeführt und die Reaktion in einer Suspension durchgeführt wird.

17. Verfahren nach einem der Ansprüche 12 bis 15,
**dadurch gekennzeichnet**,
daß der Katalysator oder die Katalysatorkomponenten in geformtem Zustand mit oder ohne Zusatz von Bindemitteln eingesetzt werden.

Europäisches Patentamt

**EUROPÄISCHER RECHERCHENBERICHT**

Nummer der Anmeldung

EP 92 25 0343

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-1 152 021 (PULLMAN) <br> * das ganze Dokument * <br> --- | 1,5,8-12 | B01D53/36 <br> B01J29/04 <br> A62D3/00 |
| A | LA RECHERCHE <br> Bd. 19, Nr. 196, Februar 1988, PARIS <br> Seiten 252 - 253 <br> BARTHOMEUF 'CATALYSE: UNE NOUVELLE GÉNÉRATION DE ZÉOLITHES' <br> --- | 1-4 | |
| A | EP-A-0 299 149 (RUHRKOHLE AG) <br> * Spalte 3, Zeile 55 - Spalte 5, Zeile 49 * <br> ----- | 5,8,12 | |

**RECHERCHIERTE SACHGEBIETE (Int. Cl.5)**

B01D
B01J
A62D
C10M

Der vorliegende Recherchenbericht wurde für alle Patentansprüche erstellt

| Recherchenort | Abschlußdatum der Recherche | Prüfer |
|---|---|---|
| DEN HAAG | 16 MAERZ 1993 | CUBAS ALCARAZ J.L. |